# EUROPEAN PATENT SPECIFICATION

(11) **EP 4 304 871 B1**
(45) Date of publication and mention of the grant of the patent: **23.04.2025**
(21) Application number: 22725528.8
(22) Date of filing: 11.03.2022
(51) Int. Cl.: B42D 25/328, B42D 25/351, B42D 25/36, B42D 25/373, B42D 25/382, B42D 25/387, B42D 25/45

(54) **SECURITY DOCUMENT WITH UV-ABSORBING SECURITY ELEMENT**
SICHERHEITSDOKUMENT MIT UV-ABSORBIERENDEM SICHERHEITSELEMENT
DOCUMENT DE SÉCURITÉ AVEC ÉLÉMENT DE SÉCURITÉ ABSORBANT LES UV

(30) Priority: 12.03.2021 HU 2100042 U
(43) Date of publication of application: 17.01.2024
(73) Proprietor: Any Biztonsági Nyomda Nyrt, 1102 Budapest (HU)
(72) Inventor: SZÉKELYHIDI, Lajos, 2090 Remeteszolos (HU); MEGYERI, Balázs, 1026 Budapest (HU); IMRE, Géza, 2151 Fót (HU)
(74) Representative: Kovári, Zoltán
(86) International application number: PCT/HU2022/050022
(87) International publication number: WO 2022/189815

(56) References cited:
- EP-A2- 1 719 637

## Description

### The field of the invention

The object of the present invention relates to system for checking security document, particularly to systems with security document containing an UV-absorbing security element.

### The state of the art

Security documents need to be provided with security elements for the purpose of preventing their forgery. The essence of the security element is to make it difficult to create duplicates, or at least so that this may only be accomplished with complex apparatus and/or specialist knowledge. At the same time it is preferred if the authenticity and/or the integrity of the security elements is easy to check, either with the naked eye or with a device that is easily accessible and easy to use.

Patent document number EP1719637B1 discloses the preamble of claim 1 or presents a document provided with such a security element, where the security document has a window that is transparent under natural light and that contains a material that absorbs UV light. In addition, it also contains ink that fluoresces upon the effect of UV light, i.e. fluorescent ink, above the UV-absorbing layer. During the checking of the security document when illuminating the one side of the transparent window with UV light the surface coated with fluorescent ink becomes outlined, while when illuminating the other side all of the UV light is absorbed in the UV-absorbing layer. Only a UV light source is required in order to check the authenticity of the security document. However, its production is made complex by the fact that UV-absorbing material and material that is fluorescent in UV light have to be applied to the document, in other words its production involves multiple steps.

As a consequence of the above there is a need for a system for checking security documents, which capable to easily check the authenticity of the security document and the security elements placed on it may be produced in a single step.

### Brief description of the invention

The objective of the present invention is to provide a system for checking security document that is free of the disadvantages according to the state of the art.

The present invention is based on the recognition that by applying a UV-absorbing print onto one of the layers of a transparent window of a security document that has a window transparent to natural light, a UV-absorbing security element that is not visible in natural light is created, the existence of which may be checked with UV light and with a UV-fluorescent surface placed behind the security document.

In accordance with the above, the present invention relates to a system with a security document that has a window that is transparent in natural light and a UV-absorbing security element in it, and characteristic of it is that the UV-absorbing security element is located on a part of the area of the transparent window, and the UV-absorbing security element is an element containing UV-absorbing ink, and further the system containing UV-light source and UV-fluorescent surface.

The invention is determined in claim 1.

The preferred embodiments of the invention are determined in the subclaims.

In the following the invention is presented in detail with reference to the attached figures, which show preferred embodiments of the security document according to the invention.

In the figures
Figure 1 shows a top view of a preferred embodiment of the security document;
Figure 2 shows a cross-sectional view of the system for checking the security document according to the invention;
Figure 3 shows a top view of another preferred embodiment of the security document;
Figure 4 shows a top view of another preferred embodiment of the security document.

The invention is a system containing a UV light source, a security document and a UV fluorescent surface.

### Detailed description of the invention

In the specification of the present invention the term transparent is understood to mean the property of light transmittance with respect to natural light, unless in the given case it is specifically mentioned the specific light we are using the term transparent in connection with. For example, the transparent window is understood to mean that the aforementioned window transmits natural light, i.e. is transparent, but that this is not necessarily true in the case of other light, such as UV light.

The essence of the security document is that the security document has a transparent window, and that UV-absorbing ink is printed onto one of the layers of the transparent window in some kind of configuration. In this way, using UV light and a surface that fluoresces under UV light, the authenticity of the UV-absorbing security element may be easily checked, because the pattern of the UV-absorbing ink will project a shadow onto the fluorescent surface placed on the side opposite to the irradiation.

In the context of the present invention security document is understood to mean all documents, certificates, papers that physically exist and from the forgery of which forgers may gain profit, for example, documents serving as proof of identity, passports, travel passes, concert and flight tickets, bank notes, etc.

In the context of the present invention UV-absorbing security element is understood to mean an element placed on a security document that provides protection against forgery and that contains ink that absorbs UV light.

In the context of the present invention transparent window is understood to mean that part of a security document that is substantially transparent to natural light, in other words it is possible to see through the security document at the transparent window part of the security document. A security document may even have several transparent windows. A security document may even have several UV-absorbing security elements. Even several UV-absorbing security elements may be placed in one transparent window. If the security document has several transparent windows, then at least one of the transparent windows contains at least one UV-absorbing security element. In other words, that arrangement also belongs to the scope of protection of the present invention where the security document has several transparent windows among which there is one or more that does not contain a UV-absorbing security element. Such an arrangement further increases the difficulty of forgery.

The UV-absorbing security element is positioned on one part of the area of the transparent window. In other words, a part of the area of the transparent window does not have a UV-absorbing element, and a part of the area of the transparent window does have a UV-absorbing element. This arrangement ensures that the shadow of the UV-absorbing security element is separated in the projection of the UV light transmitting part.

In the context of the present invention fluorescence is understood to mean the phenomenon when the fluorescent material emits light due to the exciting effect of UV light.

In the context of the present invention a UV-fluorescent surface is understood to mean a surface containing a UV-fluorescent material, in other words a surface that emits light due to the effect of UV light. Paper containing an optical whitener is, for example, such a surface.

In the context of the present invention a directed light source is understood to mean a light source in the case of which the radiation angle is a maximum of 45°, preferably a maximum of 20°. Light sources such as these have greater luminosity, therefore the fluorescence light elicited by the UV light will be brighter, in addition there will be much greater contrast in the appearance of the "light-shadow" edges.

In the context of the present invention a layer ensuring a phenomenon based on light diffraction (light bending) is primarily understood to mean a layer used for security purposes which, as a result of its design, breaks up the combined light incident on it into colours, and so reflects the light broken up in this way into specific, different directions in space. A form of this that is particularly useful from the point of view of security is represented by those devices (DOVID, i.e. Diffractive Optically Variable Imaging Device) that break up and reflect the light in such a way that the viewer observes an interpretable image.

In the context of the present invention anti-Stokes pigments are understood to mean those pigments that emit shorter wavelength radiation, which is characteristically but not exclusively visible radiation, due to the effect of longer wavelength radiation, which is characteristically but not exclusively infrared radiation.

In the context of the present invention infrared fluorescent pigments are understood to mean those pigments that emit longer wavelength infrared radiation upon the effect of shorter wavelength excitation, which is characteristically but not exclusively visible radiation.

In the context of the present invention iridescent pigments are understood to mean pigments that substantially transmit the light incident on them (they are transparent) but partially reflect a small part of the light broken up into its colours.

In the context of the present invention metallic pigments are understood to mean pigments that reflect the light incident on them in a controlled way (similarly to metal surfaces).

In the context of the present invention pigments that vary in colour depending on the direction of illumination and observation are understood to mean pigments that reflect a determinant part of the light incident on them in such a way that the observer sees different colours depending on the direction of observation.

In the context of the present invention photochromic pigments are understood to mean pigments that reversibly change their colour due to the effect of electromagnetic irradiation (characteristically but not exclusively ultraviolet irradiation).

In the context of the present invention thermochromic pigments are understood to mean pigments that change their colour due to the effect of a change of temperature. The process may be reversible or irreversible.

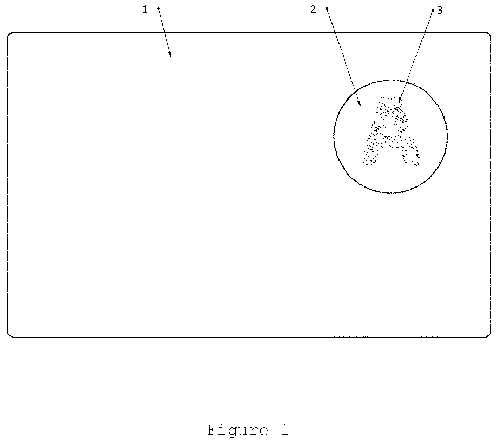

Figure 1 shows a top view of a preferred embodiment of the security document 1 according to the invention. The security document 1 has a transparent window 2, on which a UV-absorbing security element 3 may be found. The UV-absorbing security element 3 is formed from ink that absorbs UV light, which is applied to one of the layers of the transparent window 2, thereby creating a UV-absorbing security element 3 the authenticity of which may be checked in a simple way using a UV light and a UV-fluorescent surface 6. The UV-absorbing security element 3 is not visible to the naked eye in natural light. In figure 1 the UV-absorbing security element 3 is formed in the shape of the letter A.

Naturally the possibility is not excluded of placing several UV-absorbing security elements 3 onto the surface of one of the layers of the transparent window 2 instead of just one.

The UV-absorbing security element 3 may be formed in the shape of an aesthetic pattern, it may depict something specific, or it may even be in the form of a code, such as a set of numbers. It is also not ruled out that the UV-absorbing security element 3 depicts an abstract or random design, but in this case it is more difficult to check whether the UV-absorbing security element 3 has been tampered with. It is difficult to copy the UV-absorbing security element 3 because the UV-absorbing characteristic is derived from colourless ink, which is not detected by a photocopier or a scanner. Furthermore such inks are special and are not readily commercially available.

Also, the scope of protection of the present invention includes those cases where the transparent window 2 is large, and even takes up the entire surface of the security document 1, or where more than one transparent window 2 is located on the surface of the security document 1. The shape of the transparent window 2 is irrelevant from the point of view of the idea behind the invention, it may be circular as shown in figure 1, or it may be square, rectangular, or have other more complex shapes, such as the outline of a plant, animal, emblem, etc.

The security document 1 provided with a transparent window 2 according to figure 1 is an identity card, which is produced in a way known of to the person skilled in the art. The plastic-based security documents 1 provided with a transparent window 2 may be produced in several ways. The simplest is the single-layer document. In this case the base of the security document 1 is a transparent film, on which the opaque part (white) is produced using a printing technique. The printed elements (in addition to this) of the document are applied to this layer. The white print is, obviously, not applied to the area of the transparent window 2. It is possible and preferable to laminate this printed film with additional transparent layers, and thereby produce the final structure. If it is necessary to place some sort of layer, such as an electronic chip and antenna, inside the document, then it is preferable to place those on a transparent layer and then place that between two white covering layers. Following this the two covering layers need to be cut out at the area of the transparent window 2 and then positioned on the two sides of the security document 1 so that they precisely overlap each other.

The UV-absorbing element functioning as the UV-absorbing security element 3 is formed with the application of ink that absorbs UV light. The UV light absorbing ink is applied to the area of the transparent window 2 using conventional printing technology, such as, but not exclusively using screen printing, offset printing, flexo, inkjet printing and other digital printing technologies. Depending on the construction the UV-absorbing security element 3 may be placed on the inside of the security document 1 or onto its surface.

The UV light absorbing chemical component of the ink that absorbs UV light may be of many different kinds, and is preferably, but not exclusively made from benzoate, benzophenone, benzotriazole, formamidine, triazine, or benzoxazine derivatives. The concentration used depends very much on the absorption coefficient of the given substance, and this may vary between 1 and 40 mass percent, preferably between 2 and 20 mass%. The other components of the ink that absorbs UV light belong to the knowledge of the person skilled in the art and are those components that are conventionally used in the given printing industry process, such as binders, stabilisers, etc.

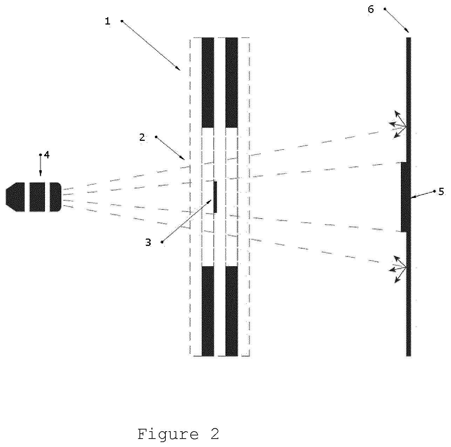

Figure 2 shows the system, according to the invention, for checking the security document 1. The system containing the security document 1, an UV light source 4 and an UV fluorescent surface 6.

During the checking of the security document 1, it is placed between the UV light source 4 and the UV fluorescent surface 6. Using a directed UV light source 4 a UV fluorescent surface 6 is illuminated with directed UV light through the transparent window 2 of the security document 1. The UV fluorescent surface 6 is a sheet of paper that contains optical whitener which will shine with a bluish light due to the effect of UV light. A shadow 5 will appear on the part of the UV fluorescent surface 6 illuminated with UV light through the transparent window 2 where the UV-absorbing security element 3 located in the transparent window 2 has absorbed the UV light. More precisely, due to the effect of the UV light, bluish light will appear on the other parts of the UV fluorescent surface 6, i.e. on those parts not shaded by the UV-absorbing security element 3. In this way simply by using a UV light source 4 and a UV fluorescent surface 6 the existence of the UV-absorbing security element 3 not visible to the naked eye may be verified. Naturally the use of an undirected UV light source and/or another surface with a UV fluorescent effect instead of office paper is not excluded.

All in all these devices are easily available and the fluorescent effect is more intense with the use of a directed light source.

In addition to the UV-absorbing security element 3 the security document 1 may be provided with secondary security elements, the purpose of which is to prevent forging of the security document 1 or to render it more difficult. Depending on their type these secondary security elements may be placed in the transparent window 2, or in other parts of the security document 1 as well. Additionally, depending on the type of the given secondary security element it may be placed on the surface of the security document 1 or in its material. Such secondary security elements may be, for example:
- a layer providing a phenomenon based on light diffraction;
- laser engraved elements (e.g. photo);
- fluorescent security elements;
- anti-Stokes pigments;
- infrared fluorescent elements;
- iridescent pigments;
- metallic pigments;
- pigments that change their colour depending on the direction of illumination and observation;
- photochromic pigments;
- thermochromic pigments.

### Examples

### Example 1: Security document 1 according to figure 1

The security document 1 provided with a transparent window 2 according to figure 1 is an identity card, which was created as a multilayer document in the way disclosed in the specification. The transparent window 2 contains a UV-absorbing security element 3 in the shape of a letter "A", which was then placed between two layers of the transparent window 2 using flexo printing. The UV-absorbing security element 3 contains a benzoate derivative, as UV-absorbing compound, and flexo ink.

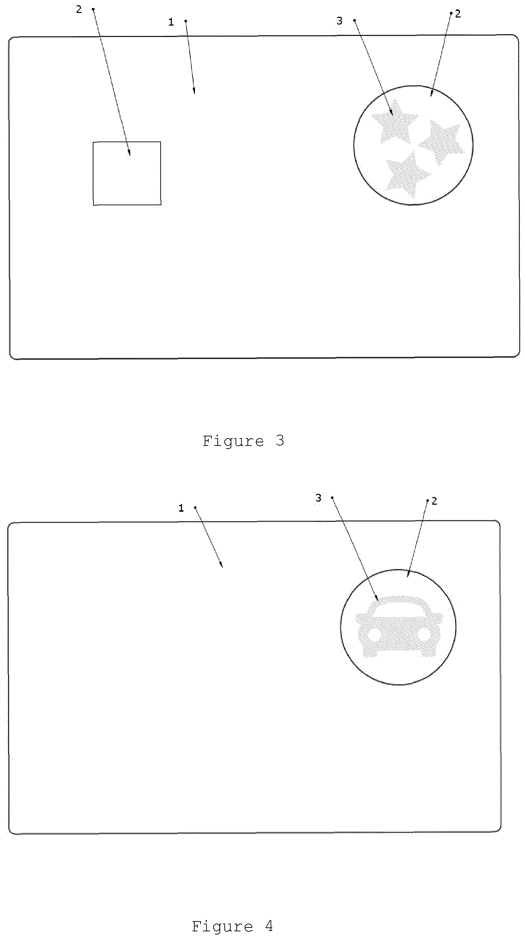

### Example 2: Security document 1 according to figure 3

The security document 1 according to figure 3 is an access card, which was created as a single-layer document in the way disclosed in the specification. One of the transparent window 2 is provided with star-shaped UV-absorbing security elements 3, which were applied to the surface of the transparent window 2 using offset printing. The security element 3 contains a benzotriazole derivative, as UV-absorbing compound, and offset ink. The other transparent window 2 does not contain a UV-absorbing security element 3.

### Example 3: Security document 1 according to figure 4

The security document 1 according to figure 4 is a vehicle registration document, which was created as a multilayer document in the way disclosed in the specification. The transparent window 2 is provided with a UV-absorbing security element 3 in the shape of a motor vehicle, which was placed between two layers of the transparent window 2 using inkjet printing. The UV-absorbing security element 3 contains a formamidine derivative, as UV-absorbing compound, and inkjet ink.

The security document 1 according to the example contains iridescent pigments as secondary security elements (not depicted) on the entire surface of the security document 1.

The advantage of the solution according to the invention is that with the application of one layer of ink a security document provided with a UV-absorbing security element is created that may be produced in a simple way, and that does not require special devices for it to be checked, but is not visible to the naked eye in natural light.

## Claims

1. System for checking a security document (1), wherein the security document has a transparent window (2) and a UV-absorbing security element (3) in it, the UV-absorbing security element (3) is located on a part of the area of the transparent window (2), and the UV-absorbing security element (3) is an element containing UV-absorbing ink, wherein the system contains a UV light source (4), and the security document (1), the system being **characterised in that** it further contains an UV fluorescent surface(6), where the security document (1) is located between the UV light source (4) and the UV fluorescent surface (6), and where the UV light source (4) illuminates the UV fluorescent surface (6) through the transparent window (2), and the UV-absorbing security element (3) projects a shadow (5) onto the UV fluorescent surface (6).

2. System for checking security document (1) according to claim 1, **characterised by** that the security document has several transparent windows (2) and/or several UV-absorbing security elements (3).

3. System for checking security document (1) according to claim 1 or 2, **characterised by** that the security document is multi-layered and the UV-absorbing security element (3) is located between the layers of the transparent window (2) of the security document (1).

4. System for checking security document (1) according to any one of claims 1 to 3, **characterised by** that the security document is an identity card, passport, driving licence, vehicle registration document, residence permit, access card or travel pass.

5. System for checking security document (1) according to any one of claims 1 to 4, **characterised by** that the security document also contains at least one secondary security element.

6. System for checking security document (1) according to any one of claims 1 to 5, **characterised by** that the secondary security element is selected from among the following:
- a layer providing a phenomenon based on light diffraction;
- laser engraved elements (e.g. photo);
- fluorescent security elements;
- anti-Stokes pigments;
- infrared fluorescent elements;
- iridescent pigments;
- metallic pigments;
- pigments that change their colour depending on the direction of illumination and observation;
- photochromic pigments;
thermochromic pigments.

7. System according to any one of claims 1 to 6,
**characterised by** that the UV light source (4) is a directed light source.

8. System according to any one of claims 1 to 7,
**characterised by** that the UV fluorescent surface (6) is paper containing optical whitener.

## Patentansprüche

1. System zur Überprüfung eines Sicherheitsdokuments (1), wobei das Sicherheitsdokument ein transparentes Fenster (2) und ein UV-absorbierendes Sicherheitselement (3) darin aufweist, das UV-absorbierende Sicherheitselement (3) auf einem Teil der Fläche des transparenten Fensters (2) angeordnet ist und das UV-absorbierende Sicherheitselement (3) ein Element ist, das UV-absorbierende Tinte enthält, wobei das System eine UV-Lichtquelle (4) und das Sicherheitsdokument (1) enthält, wobei das System **dadurch gekennzeichnet ist, dass** es ferner eine UV-fluoreszierende Oberfläche (6) enthält, wobei sich das Sicherheitsdokument (1) zwischen der UV-Lichtquelle (4) und der UV-fluoreszierenden Oberfläche (6) befindet, und wobei die UV-Lichtquelle (4) die UV-fluoreszierende Oberfläche (6) durch das transparente Fenster (2) beleuchtet und das UV-absorbierende Sicherheitselement (3) einen Schatten (5) auf die UV-fluoreszierende Oberfläche (6) projiziert.

2. System zur Überprüfung eines Sicherheitsdokuments (1) nach Anspruch 1, **dadurch gekennzeichnet, dass** das Sicherheitsdokument mehrere transparente Fenster (2) und/oder mehrere UV-absorbierende Sicherheitselemente (3) aufweist.

3. System zur Überprüfung eines Sicherheitsdokuments (1) nach Anspruch 1 oder 2, **dadurch gekennzeichnet, dass** das Sicherheitsdokument mehrschichtig ist und das UV-absorbierende Sicherheitselement (3) zwischen den Schichten des transparenten Fensters (2) des Sicherheitsdokuments (1) angeordnet ist.

4. System zur Überprüfung eines Sicherheitsdokuments (1) nach einem der Ansprüche 1 bis 3, **dadurch gekennzeichnet, dass** es sich bei dem Sicherheitsdokument um einen Personalausweis, einen Reisepass, einen Führerschein, eine Zulassungsbescheinigung, eine Aufenthaltsgenehmigung, eine Zugangskarte oder einen Fahrausweis handelt.

5. System zur Überprüfung eines Sicherheitsdokuments (1) nach einem der Ansprüche 1 bis 4, **dadurch gekennzeichnet, dass** das Sicherheitsdokument auch mindestens ein sekundäres Sicherheitselement enthält.

6. System zur Überprüfung eines Sicherheitsdokuments (1) nach einem der Ansprüche 1 bis 5, **dadurch gekennzeichnet, dass** das sekundäre Sicherheitselement aus den Folgenden ausgewählt ist:
- einer Schicht, die ein auf Lichtbeugung basierendes Phänomen bereitstellt;
- lasergravierten Elementen (z.B. Foto);
- fluoreszierenden Sicherheitselementen;
- Anti-Stokes-Pigmenten;
- infrarot-fluoreszierenden Elementen;
- irisierenden Pigmenten;
- metallischen Pigmenten;
- Pigmenten, die ihre Farbe je nach Beleuchtungs- und Beobachtungsrichtung ändern;
- photochromen Pigmenten;
- thermochromen Pigmenten.

7. System nach einem der Ansprüche 1 bis 6, **dadurch gekennzeichnet, dass** die UV-Lichtquelle (4) eine gerichtete Lichtquelle ist.

8. System nach einem der Ansprüche 1 bis 7, **dadurch gekennzeichnet, dass** die UV-fluoreszierende Oberfläche (6) Papier ist, das optischen Aufheller enthält.

## Revendications

1. Système de contrôle d'un document de sécurité (1), dans lequel le document de sécurité comporte une fenêtre transparente (2) et un élément de sécurité absorbant les UV (3), l'élément de sécurité absorbant les UV (3) est situé sur une partie de la zone de la fenêtre transparente (2), et l'élément de sécurité absorbant les UV (3) est un élément contenant une encre absorbant les UV, dans lequel le système contient une source de lumière UV (4), et le document de sécurité (1), le système étant **caractérisé en ce qu'**il contient en outre une surface fluorescente aux UV (6), dans lequel le document de sécurité (1) est situé entre la source de lumière UV (4) et la surface fluorescente aux UV (6), et dans lequel la source de lumière UV (4) éclaire la surface fluorescente aux UV (6) à travers la fenêtre transparente (2), et l'élément de sécurité absorbant les UV (3) projette une ombre (5) sur la surface fluorescente aux UV (6).

2. Système de contrôle d'un document de sécurité (1) selon la revendication 1, **caractérisé en ce que** le document de sécurité comporte plusieurs fenêtres transparentes (2) et/ou plusieurs éléments de sécurité absorbant les UV (3).

3. Système de contrôle d'un document de sécurité (1) selon la revendication 1 ou 2, **caractérisé en ce que** le document de sécurité est multicouche et l'élément de sécurité absorbant les UV (3) est situé entre les couches de la fenêtre transparente (2) du document de sécurité (1).

4. Système de contrôle d'un document de sécurité (1) selon l'une quelconque des revendications 1 à 3, **caractérisé en ce que** le document de sécurité est une carte d'identité, un passeport, un permis de conduire, un certificat d'immatriculation, un permis de séjour, une carte d'accès ou un titre de transport.

5. Système de contrôle d'un document de sécurité (1) selon l'une quelconque des revendications 1 à 4, **caractérisé en ce que** le document de sécurité contient également au moins un élément de sécurité secondaire.

6. Système de contrôle d'un document de sécurité (1) selon l'une quelconque des revendications 1 à 5, **caractérisé en ce que** l'élément de sécurité secondaire est choisi parmi les éléments suivants :
- une couche fournissant un phénomène basé sur la diffraction de la lumière ;
- des éléments gravés au laser (par exemple photo) ;
- des éléments de sécurité fluorescents ;
- des pigments anti-Stokes ;
- des éléments fluorescents dans l'infrarouge ;
- des pigments iridescents ;
- des pigments métalliques ;
- des pigments qui changent de couleur en fonction de la direction de l'éclairage et de l'observation ;
- des pigments photochromiques ;
des pigments thermochromiques.

7. Système selon l'une quelconque des revendications 1 à 6,
**caractérisé en ce que** la source de lumière UV (4) est une source de lumière dirigée.

8. Système selon l'une quelconque des revendications 1 à 7,
**caractérisé en ce que** la surface fluorescente UV (6) est un papier contenant un blanchisseur optique.
